# EUROPEAN PATENT SPECIFICATION

(11) **EP 4 620 722 B1**
(45) Date of publication and mention of the grant of the patent: **01.04.2026**
(21) Application number: 25158868.7
(22) Date of filing: 19.02.2025
(51) Int. Cl.: B60L 53/16, B60L 58/12, F21V 31/00, H01R 13/717, H02J 7/00

(54) **DUAL-COVER LIGHTING DEVICE WITH WATERPROOF MEMBER**
BELEUCHTUNGSVORRICHTUNG MIT DOPPELTER ABDECKUNG UND WASSERDICHTEM ELEMENT
DISPOSITIF D'ECLAIRAGE A DOUBLE COUVERCLE AVEC ELEMENT ETANCHE

(30) Priority: 22.03.2024 JP 2024045941
(43) Date of publication of application: 24.09.2025
(73) Proprietor: Yazaki Corporation, Tokyo 108-0075 (JP)
(72) Inventor: Sawayanagi, Masahiro, Makinohara-shi, Shizuoka 421-0407 (JP); Hori, Takahiro, Makinohara-shi, Shizuoka 421-0407 (JP)
(74) Representative: Grünecker Patent- und Rechtsanwälte PartG mbB

(56) References cited:
- CN-A- 102 042 514
- CN-A- 108 397 713
- CN-U- 209 088 212
- JP-A- 2013 101 819
- JP-B2- 5 701 668
- US-A1- 2014 056 000
- US-B2- 11 878 626
- US-B2- 8 633 409

## Description

### Technical Field

The present invention relates to a lighting device.

### Background

Lighting devices (for example, room lamps, map lamps, courtesy lamps, charging port lighting devices, and the like) are installed in various locations in an automobile (see Patent Document 1).

### Related Art

### Patent Document

Patent Document 1: JP2020-13674A

### Summary of the Invention

### Problem to be Solved by the Invention

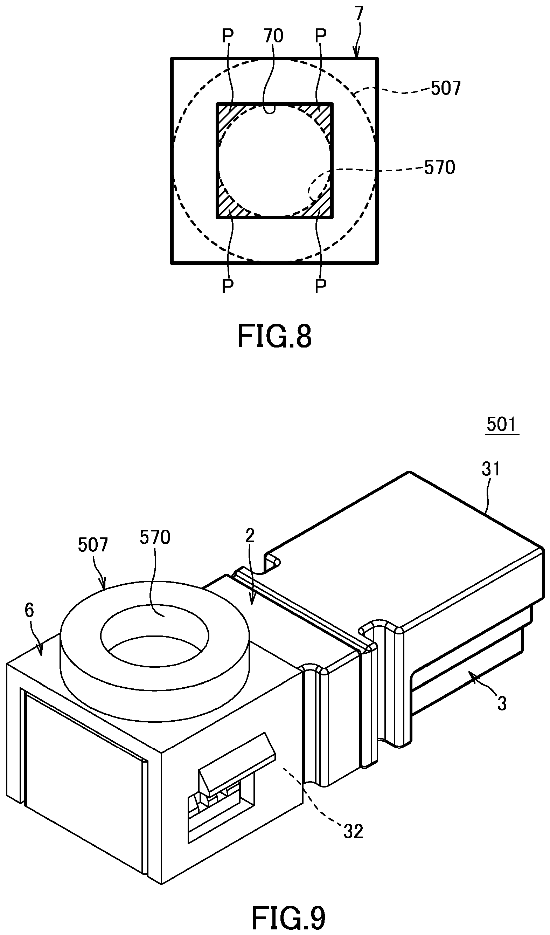

Figs. 9 to 11 are diagrams illustrating a reference example of an automotive lighting device developed by the inventors of the present application. This lighting device 501 is an indicator lighting device that is attached to a vehicle panel.

The lighting device 501 includes a circuit board 5 on which two LEDs (Light Emitting Diodes) 54 serving as light sources are mounted, bus bars, a housing 3, a first cover 2, a second cover 6, and a waterproof member 507 made of sponge.

The housing 3 is made of an opaque synthetic resin. The housing 3 has a hood portion 31 into which a mating connector connected to a power source is fitted, and a component storage portion 32. The circuit board 5 is stored in the component storage portion 32. The bus bars have terminal portions that are disposed within the hood portion 31 and electrically connected to the mating connector, and board connection portions that are disposed in the component storage portion 32 and electrically connected to the circuit board 5.

The first cover 2 is made of a translucent synthetic resin. The first cover 2 is assembled with the housing 3 and closes the opening of the component storage portion 32. The second cover 6 is made of a translucent synthetic resin. The second cover 6 is placed on top of the first cover 2 and assembled with the first cover 2. The waterproof member 507 is attached to the surface of the second cover 6. The waterproof member 507 is formed in a ring shape having a circular aperture 570 that allows light from the two LEDs 54 to transmit.

The lighting device 501 is attached to the back side of the vehicle panel in which a through hole is formed. With the lighting device 501 attached to the back side of the vehicle panel, the waterproof member 507 abuts, in a compressed state, against the outer periphery of the through hole, thereby making waterproof between the vehicle panel and the second cover 6. The light from the two LEDs 54 passes through the first cover 2 and the second cover 6, transmits through the aperture 570 of the waterproof member 507, and the through hole of the vehicle panel, and irradiates the front side of the vehicle panel.

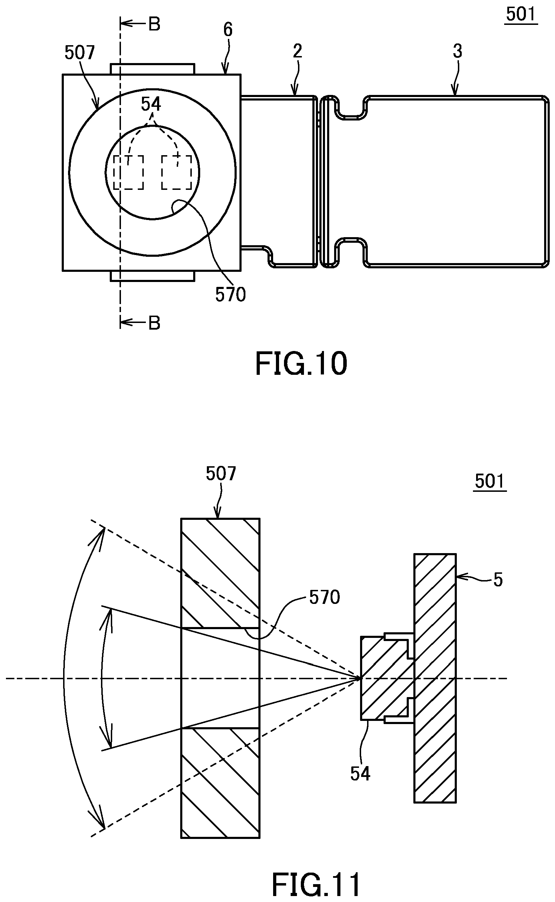

In the above lighting device 501, the waterproof member 507 is ring-shaped, and when multiple LEDs 54 are used, the ring-shaped waterproof member 507 blocks the end light of the LEDs 54 (illustrated by broken lines in Fig. 11) as illustrated in Fig. 11. That is, Fig. 11 is a cross-sectional view of a portion that is off-center of the waterproof member 507, and since it is off-center, the aperture 570 is narrow, and therefore the end light of the LEDs 54 is blocked. Note that the first cover 2, the second cover 6, and the housing 3 are omitted from Fig. 11. Also, since the waterproof member 507 is ring-shaped, light transmitting portions exist at the four corners of the mounting surface of the waterproof member 507 in the second cover 6, and there is a risk of light leakage from the four corners.

From document CN 102 042 514A it is known a lighting device according to the preamble portion of claim 1.

Further prior art is disclosed in document JP 5 701 668 B2 which also refers to a lighting device.

It is an object of the present invention to improve the light emitting efficiency and reduce light leakage in a lighting device.

### Solution to Problem

The present invention discloses a lighting device with the features according to claim 1.

Furthermore, the present invention relates in claim 2 to an assembly of the lighting device according to claim 1 and a mounting member to which the lighting device is attached.

### Advantageous Effects of the Invention

According to the present invention, in a lighting device, the light emitting efficiency can be improved, and light leakage can be reduced.

### Brief Description of the Drawings

Fig. 1 is a perspective view of a lighting device according to one embodiment of the present invention.
Fig. 2 is a perspective view of the lighting device of Fig. 1 turned upside down.
Fig. 3 is an exploded view of the lighting device of Fig. 1.
Fig. 4 is a cross-sectional view illustrating the waterproof structure between the lighting device and a mounting member of Fig. 1, illustrating the state before the lighting device is attached to the mounting member.
Fig. 5 is a cross-sectional view illustrating the lighting device of Fig. 4 attached to the mounting member.
Fig. 6 is a plan view of the lighting device of Fig. 1.
Fig. 7 is a cross-sectional view taken along line A-A of Fig. 6.
Fig. 8 is a view illustrating the waterproof member of Fig. 1 and the waterproof member of Fig. 9 superimposed on each other.
Fig. 9 is a perspective view of a lighting device for an automobile as a reference example.
Fig. 10 is a plan view of the lighting device of Fig. 9.
Fig. 11 is a cross-sectional view taken along line B-B of Fig. 10.

### Detailed Description of the Exemplary Embodiment

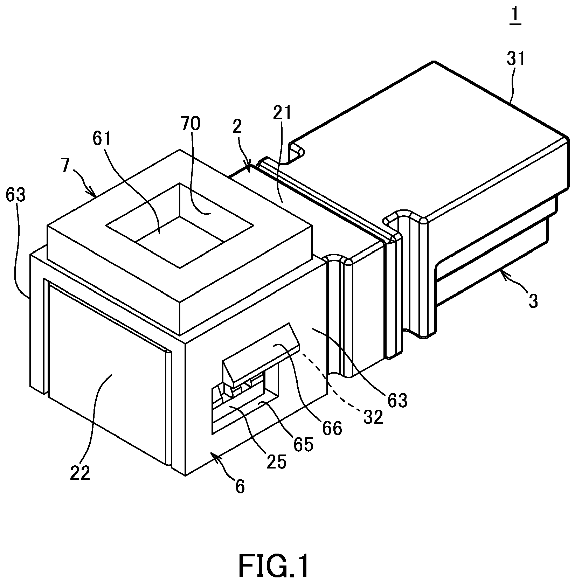

A "lighting device" and "waterproof structure between a lighting device and a mounting member" according to one embodiment of the present invention are described with reference to Figs. 1 to 8.

The lighting device 1 of this example illustrated in Figs. 1 to 3 and 6 is an indicator lighting device that is installed near a charging inlet provided in an electric vehicle or a hybrid vehicle and indicates the charging state of the battery by light.

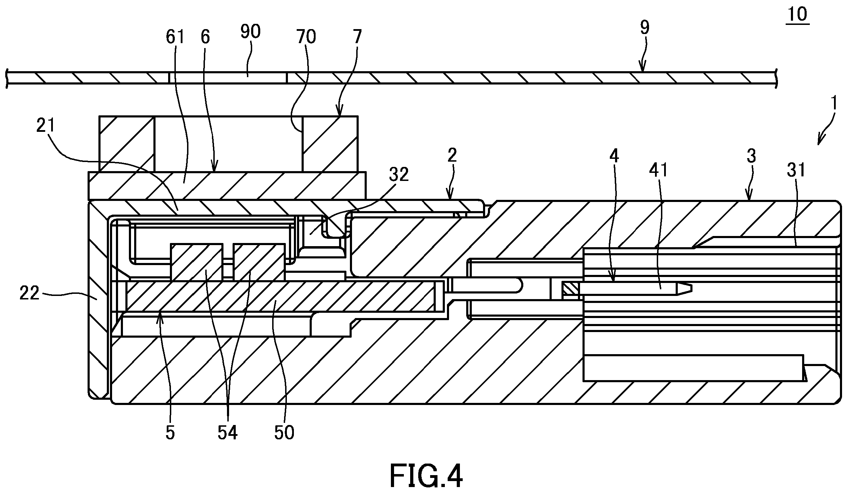

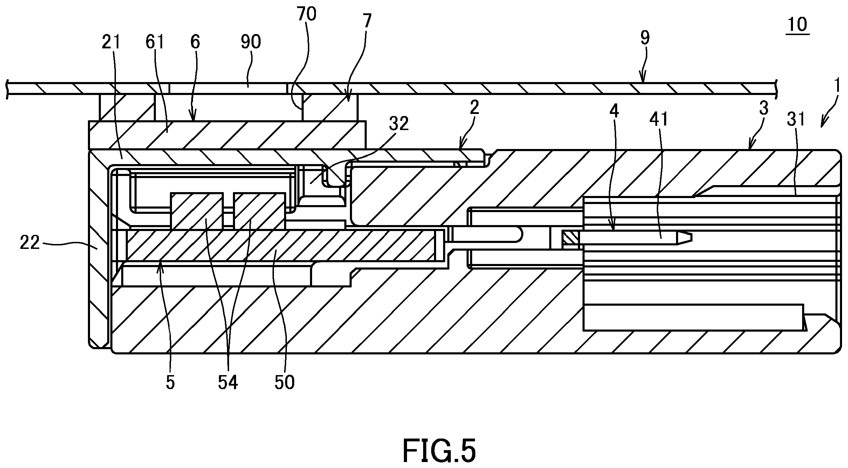

A panel 9 (corresponding to a "mounting member") illustrated in Figs. 4 and 5 is a vehicle panel (inlet panel) to which the charging inlet and the lighting device 1 are attached. A through hole 90 is formed in the panel 9 to allow light from the lighting device 1 to pass through. As illustrated in Fig. 5, the lighting device 1 is attached to the back side of the panel 9 and emits light from the through hole 90 to the front side of the panel 9. A mating connector connected to a power source of the automobile is fitted into the lighting device 1, and the power is supplied from the vehicle side.

The lighting device 1 includes a circuit board 5 on which two LEDs (Light Emitting Diodes) 54 serving as light sources are mounted, a housing 3, two busbars 4, a first cover 2, a second cover 6, and a waterproof member 7 made of sponge.

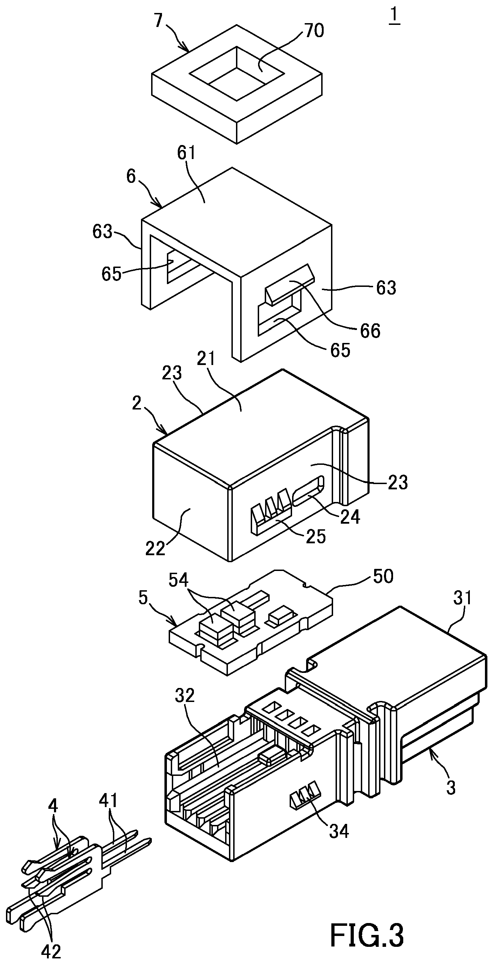

The circuit board 5 is a printed circuit board in which a wiring pattern is formed on the surface of a circuit board main body 50 formed in a rectangular plate shape from an insulating material. As illustrated in Fig. 3, two LEDs 54 and electronic components for making the LEDs 54 emit light are mounted on one surface of the circuit board main body 50. The two LEDs 54 are arranged side by side in the longitudinal direction of the circuit board main body 50.

The housing 3 is made of an opaque synthetic resin. The housing 3 integrally includes a hood portion 31 into which a mating connector is fitted, and a component storage portion 32 provided behind the hood portion 31. The hood portion 31 is formed in a box shape capable of receiving the mating connector, and is open to the front. The component storage portion 32 has a box-like outer shape connected to the back wall of the hood portion 31. The component storage portion 32 is open in two directions, i.e., on the upper side and the back side. The circuit board 5 is contained in the component storage portion 32. In addition, both side surfaces of the component storage portion 32 are provided with locking protrusions 34 (see Fig. 3) that lock with the first cover 2.

In this specification, the lighting device 1 is described such that a side that mates with the mating connector is referred to as the "front", and a side opposite the side that mates with the mating connector is referred to as the "rear". In addition, a side of a first light-transmitting plate 21 of the first cover 2 is referred to as the "upper side", and a side of the housing 3 opposite the side where the first light-transmitting plate 21 is positioned is referred to as the "lower side". These terms are used for the convenience of explaining the configuration of the lighting device 1, and do not necessarily correspond to the directions in the place where the lighting device 1 is actually used.

The two busbars 4 have the same shape and size. These busbars 4 are formed by punching a conductive metal plate into the shape illustrated in Fig. 3. Each of the busbars 4 has a terminal portion 41 disposed in the hood portion 31 and electrically connected to the mating connector, and a circuit board connection portion 42 disposed in the component storage portion 32 and electrically connected to the circuit board 5.

The first cover 2 is made of a translucent synthetic resin. The first cover 2 is assembled with the housing 3 and closes the opening of the component storage portion 32. That is, the first cover 2 is integrally provided with a first light-transmitting plate 21 in a rectangular plate shape that faces the circuit board 5, a pair of first side plates 23 connected perpendicularly to the edges forming the long sides of the first light-transmitting plate 21, and a rear plate 22 connected perpendicularly to the edge forming the short side of the first light-transmitting plate 21.

The first light-transmitting plate 21 closes the upper opening of the component storage portion 32. Light from the two LEDs 54 transmits through the first light-transmitting plate 21. The first light-transmitting plate 21 is treated with lens cutting as a light diffusion treatment. The pair of first side plates 23 overlaps on respective side surfaces of the component storage portion 32. Each of the first side plates 23 is provided with a locking hole 24 that locks with the locking protrusion 34 of the component storage portion 32. Each of the first side plates 23 is also provided with a locking protrusion 25 that locks with the second cover 6. The rear plate 22 closes the rear opening of the component storage portion 32.

The second cover 6 is made of a translucent synthetic resin. The second cover 6 is integrally provided with a second light-transmitting plate 61 in a rectangular plate shape that overlaps on the first light-transmitting plate 21, and a pair of second side plates 63 that overlaps on the pair of first side plates 23. Light from the two LEDs 54 transmits through the first light-transmitting plate 21 and the second light-transmitting plate 61. Each of the second side plates 63 is provided with a locking hole 65 that locks with the locking protrusion 25 of the first cover 2. The second cover 6 is assembled with the first cover 2 by locking the locking protrusion 25 with the locking hole 65. Each of the second side plates 63 is provided with a vehicle installation lock 66 that locks with the panel 9. The lighting device 1 is attached to the panel 9 by locking the vehicle installation lock 66 with the panel 9.

The waterproof member 7 is pasted to the surface of the second light-transmitting plate 61 opposite to the first light-transmitting plate 21. The waterproof member 7 is formed in a quadrangular frame shape having an aperture 70 in a quadrangular shape through which light from the two LEDs 54 passes. The outer size of the waterproof member 7 is approximately equal to the outer size of the second light-transmitting plate 61.

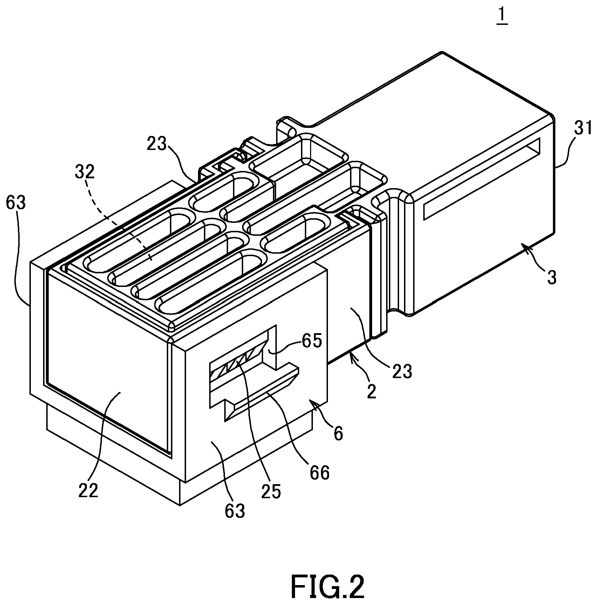

An example of the assembly procedure for the lighting device 1 is described below. First, two busbars 4 are attached to the housing 3. Next, the circuit board 5 is assembled with the housing 3. Next, the first cover 2 is assembled with the housing 3. Next, the waterproof member 7 is pasted to the second cover 6. Then, the second cover 6 is assembled with the first cover 2. Through these steps, the lighting device 1 illustrated in Figs. 1 and 2 is assembled.

Also, in this example, the first cover 2 and the second cover 6 are formed separately and then assembled to be attached to each other. One of the reasons for this is to facilitate the work of pasting the waterproof member 7. When priority is given to reducing the number of parts, the first cover 2 and the second cover 6 may be formed as a single unit.

Next, the waterproof structure 10 constituted by the lighting device 1 and the panel 9 to which the lighting device 1 is attached is described with reference to Figs. 4 and 5. As illustrated in Fig. 5, when the lighting device 1 is attached to the panel 9, the waterproof member 7 abuts, in a compressed state, against the outer periphery of the through hole 90 of the panel 9. This provides waterproof between the panel 9 and the second cover 6. The light from the two LEDs 54 transmits through the first light-transmitting plate 21 and the second light-transmitting plate 61, passes through the aperture 70 of the waterproof member 7, and the through hole 90 of the panel 9, and irradiates the front side of the panel 9.

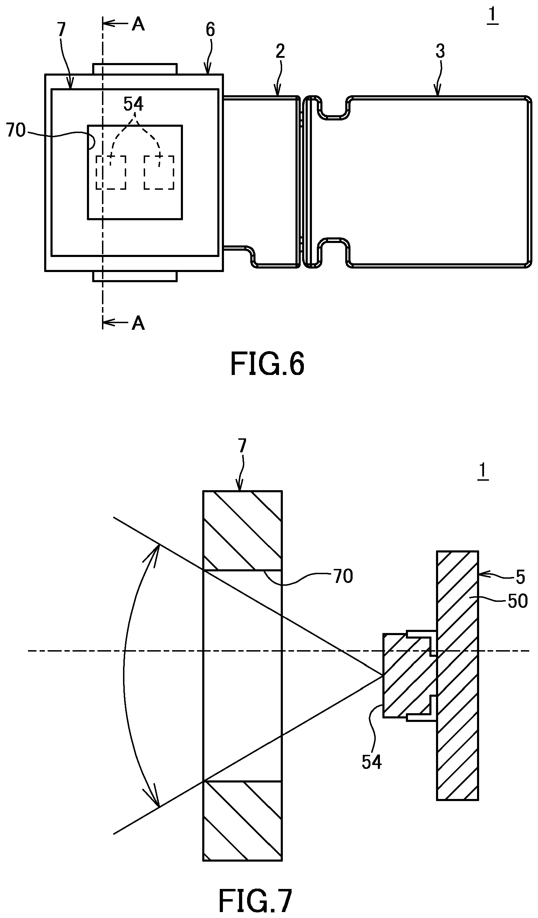

The lighting device 1 explained above has a higher light emitting efficiency than the lighting device 501 of the reference example (see Figs. 9 to 11). Fig. 8 is a diagram in which the waterproof member 7 of this example and the waterproof member 507 of the reference example are superimposed. The shaded portion P is a portion where the end light of the LED 54 is blocked by the waterproof member 507 in the lighting device 501 of the reference example. In contrast, in the lighting device 1 of this example, the shaded portion P is a portion where the waterproof member 7 does not exist and where the light of the LED 54 passes through. That is, the irradiation range of the LED light of this example illustrated in Fig. 7 is larger than the irradiation range of the LED light of the reference example indicated by the solid line in Fig. 11. The irradiation range indicated by the dashed line in Fig. 11 is the irradiation range of this example. That is, although Fig. 7 is a cross-sectional view of a portion that is off-center of the waterproof member 7, the aperture 70 of the waterproof member 7 is quadrangular, so that the aperture 70 does not become narrower even at an off-center position.

Furthermore, in the above-described lighting device 1, the four corners of the second light-transmitting plate 61, which is the mounting surface for the waterproof member 7, are covered with the waterproof member 7, so that light leakage from the four corners can be reduced.

In the above embodiment, an indicator lighting device for an automobile has been described as an example of a lighting device, but the lighting device of the present invention is not limited to an indicator lighting device. In addition, the lighting device can be attached to machines, equipment, structures, and the like other than automobiles.

Furthermore, in the above-described embodiment, the lighting device has two light sources, but the lighting device of the present invention may have three or more light sources.

The above-described embodiment merely shows a typical form of the present invention, and the present invention is not limited to this embodiment. It is to be understood that as long as the configuration of the present invention is still provided even with such modifications, such configuration with modifications are included in the scope of the present invention.

### List of Reference Signs

- 1: lighting device
- 2: first cover (cover)
- 3: housing
- 4: busbar
- 5: circuit board
- 6: second cover (cover)
- 7: waterproof member
- 9: panel (mounting member)
- 10: waterproof structure
- 54: LED (light source)

## Claims

1. A lighting device (1) comprising:
a plurality of light sources (54);
a housing (3) containing the plurality of light sources (54);
a cover (2, 6) assembled with the housing (3) and allowing light from the plurality of light sources (54) to pass through; and
a waterproof member (7) attached to the cover (2, 6) and made of sponge,
wherein the waterproof member (7) is formed in a quadrangular frame shape having an aperture (70) in a quadrangular shape through which the light from the plurality of light sources (54) passes, wherein the cover (2, 6) includes two components,
the two components including:
a first cover (2) assembled with the housing (3); and
a second cover (6) assembled with the first cover (2), the waterproof member (7) being attached to the second cover (6),
a circuit board (5) on which the plurality of light sources (54) are mounted,
**characterized in that** the first cover (2) includes:
a first light-transmitting plate (21) that faces the circuit board (5) and allows the light from the plurality of light sources (54) to transmit; and
a first side plate (23) that intersects the first light-transmitting plate (21),
and the second cover (6) includes:
a second light-transmitting plate (61) that overlaps on the first light-transmitting plate (21); and
a second side plate (63) that overlaps on the first side plate (23), and
wherein the first side plate (23) and the second side plate (63) are provided with a locking mechanism for locking to each other.

2. Assembly of the lighting device (1) according to claim 1 and a mounting member to which the lighting device (1) is attached,
wherein a through hole (90) is formed in the mounting member,
the waterproof member (7) abuts against an outer periphery of the through hole (90) of the mounting member in a compressed state, thereby making waterproof between the mounting member and the cover (2, 6), and
the light from the plurality of light sources (54) transmits through the cover (2, 6), and passes through the aperture (70) of the waterproof member (7) and the through hole (90) of the mounting member.

## Patentansprüche

1. Eine Beleuchtungsvorrichtung (1), aufweisend:
eine Vielzahl von Lichtquellen (54);
ein Gehäuse (3), das die Vielzahl der Lichtquellen (54) enthält;
eine Abdeckung (2, 6), die mit dem Gehäuse (3) zusammengebaut ist und Licht von der Vielzahl der Lichtquellen (54) durchlässt; und
ein wasserdichtes Element (7), das an der Abdeckung (2, 6) befestigt ist und aus Schwamm gefertigt ist,
wobei das wasserdichte Element (7) in Form eines viereckigen Rahmens ausgebildet ist, der eine Öffnung (70) in einer viereckigen Form aufweist, durch die das Licht von der Vielzahl von Lichtquellen (54) hindurchtritt,
wobei die Abdeckung (2, 6) zwei Bauteile aufweist,
die zwei Bauteile aufweisen:
eine erste Abdeckung (2), die mit dem Gehäuse (3) zusammengebaut ist; und
eine zweite Abdeckung (6), die mit der ersten Abdeckung (2) zusammengebaut ist, wobei das wasserdichte Element (7) an der zweiten Abdeckung (6) befestigt ist,
eine Leiterplatte (5), auf der die Vielzahl von Lichtquellen (54) montiert ist,
**dadurch gekennzeichnet, dass** die erste Abdeckung (2) aufweist:
eine erste lichtdurchlässige Platte (21), die der Leiterplatte (5) gegenüberliegt und das Licht der Vielzahl von Lichtquellen (54) durchlässt; und
eine erste Seitenplatte (23), die die erste lichtdurchlässige Platte (21) schneidet,
und die zweite Abdeckung (6) aufweist:
eine zweite lichtdurchlässige Platte (61), die sich mit der ersten lichtdurchlässigen Platte (21) überlappt; und
eine zweite Seitenplatte (63), die sich mit der ersten Seitenplatte (23) überlappt, und
wobei die erste Seitenplatte (23) und die zweite Seitenplatte (63) mit einem Verriegelungsmechanismus zum gegenseitigen Verriegeln versehen sind.

2. Baugruppe aus der Beleuchtungsvorrichtung (1) nach Anspruch 1 und einem Montageelement, an dem die Beleuchtungsvorrichtung (1) befestigt ist,
wobei in dem Montageelement ein Durchgangsloch (90) ausgebildet ist,
das wasserdichte Element (7) an einem Außenumfang des Durchgangslochs (90) des Montageelements in einem zusammengedrückten Zustand anliegt, wodurch eine Wasserdichtigkeit zwischen dem Montageelement und der Abdeckung (2, 6) hergestellt wird, und
das Licht von der Vielzahl von Lichtquellen (54) durch die Abdeckung (2, 6) hindurchgeht und durch die Öffnung (70) des wasserdichten Elements (7) und das Durchgangsloch (90) des Montageelements hindurchgeht.

## Revendications

1. Dispositif d'éclairage (1) comprenant :
une pluralité de sources lumineuses (54) ;
un boîtier (3) contenant la pluralité de sources lumineuses (54) ;
un couvercle (2, 6) assemblé au boîtier (3) et laissant passer la lumière provenant de la pluralité de sources lumineuses (54) ; et
un élément étanche (7) fixé au couvercle (2, 6) et constitué d'une éponge,
dans lequel l'élément étanche (7) est formé dans une forme de cadre quadrangulaire ayant une ouverture (70) de forme quadrangulaire à travers laquelle la lumière provenant de la pluralité de sources lumineuses (54) passe,
dans lequel le couvercle (2, 6) inclut deux composants,
les deux composants incluant :
un premier couvercle (2) assemblé au boîtier (3) ; et
un deuxième couvercle (6) assemblé au premier couvercle (2), l'élément étanche (7) étant fixé au deuxième couvercle (6),
une carte de circuit imprimé (5) sur laquelle sont montées la pluralité de sources lumineuses (54),
**caractérisé en ce que** le premier couvercle (2) inclut :
une première plaque de transmission de la lumière (21) qui fait face à la carte de circuit imprimé (5) et permet à la lumière provenant de la pluralité de sources lumineuses (54) de se transmettre ; et
une première plaque latérale (23) qui croise la première plaque de transmission de la lumière (21),
et le deuxième couvercle (6) inclut :
une deuxième plaque de transmission de la lumière (61) qui se superpose à la première plaque de transmission de la lumière (21) ; et
une deuxième plaque latérale (63) qui se superpose à la première plaque latérale (23), et
dans lequel la première plaque latérale (23) et la deuxième plaque latérale (63) sont prévues avec un mécanisme de verrouillage pour se verrouiller l'une à l'autre.

2. Assemblage du dispositif d'éclairage (1) selon la revendication 1 et d'un élément de montage auquel est fixé le dispositif d'éclairage (1),
dans lequel un trou traversant (90) est formé dans l'élément de montage,
l'élément étanche (7) s'appuie contre une périphérie extérieure du trou traversant (90) de l'élément de montage à l'état comprimé, rendant ainsi étanche l'élément de montage et le couvercle (2, 6), et
la lumière provenant de la pluralité de sources lumineuses (54) transmet à travers le couvercle (2, 6), et passe à travers l'ouverture (70) de l'élément étanche (7) et le trou traversant (90) de l'élément de montage.
